# Europäisches Patentamt
# European Patent Office
# Office européen des brevets

(19)

(11) Veröffentlichungsnummer: **0 016 074**
**B1**

(12) **EUROPÄISCHE PATENTSCHRIFT**

(45) Veröffentlichungstag der Patentschrift: **18.05.83**

(21) Anmeldenummer: **79900736.4**

(22) Anmeldetag: **10.07.79**

(86) Internationale Anmeldenummer:
**PCT/CH79/00098**

(87) Internationale Veröffentlichungsnummer:
**WO 80/00269 21.02.80 Gazette 80/4**

(51) Int. Cl.³: **F 15 B 13/042,
F 16 K 31/56**

(54) **PNEUMATISCH BETÄTIGTES STEUERVENTIL FÜR EINE VOLLPNEUMATISCHE NIEDER- UND ARBEITSDRUCKSTEUERUNG.**

(30) Priorität: **10.07.78 CH 7635/78**

(43) Veröffentlichungstag der Anmeldung:
**01.10.80 Patentblatt 80/20**

(45) Bekanntmachung des Hinweises auf die Patenterteilung:
**18.05.83 Patentblatt 83/20**

(84) Benannte Vertragsstaaten:
**DE FR GB SE**

(56) Entgegenhaltungen:
**DE - A - 1 653 525**
**DE - B - 1 475 930**
**DE - C - 1 200 084**
**FR - A - 2 060 194**
**FR - A - 2 150 639**
**FR - A - 2 346 584**
**US - A - 2 773 486**
**US - A - 3 429 327**
**US - A - 3 592 230**
**US - A - 3 707 982**

(73) Patentinhaber: **Gassert, Willy**
**Hauptgasse 59**
**CH-4500 Solothurn (CH)**
(73) Patentinhaber: **Wirz, Ernst**
**Bürglen 9**
**CH-8627 Grüningen (CH)**

(72) Erfinder: **Gassert, Willy**
**Hauptgasse 59**
**CH-4500 Solothurn (CH)**

(74) Vertreter: **Groening, Hans Wilhelm, Dipl.-Ing. et al,**
**Siebertstrasse 4 Postfach 860 340**
**D-8000 München 86 (DE)**

Courier Press, Leamington Spa, England.

Pneumatisch betätigtes Steuerventil für eine vollpneumatische
Nieder- und Arbeitsdrucksteuerung

Die Erfindung betrifft ein pneumatisch betätigtes Steuerventil für eine vollpneumatische
Nieder- und Arbeitsdrucksteuerung, insbesondere zur Signalgabe oder für Zeit- und Folgesteuerung von pneumatischen oder hydropneumatischen Maschinen mit folgenden Merkmalen:

a) In einem Ventilgehäuse mit einem Eingangskanal für Druckluft, mindestens einem
Entlüftungskanal, zwei Ausgangskanälen und
zwei Steuereingängen ist ein Ventilschieber zur
wechselseitigen Verbindung der Ausgangskanäle mit dem Eingangskanal und dem Entlüftungskanal angeordnet;

b) Der Ventilschieber ist zwischen zwei durch
federnde Rasteinrichtungen gesicherte Schaltstellungen durch Beaufschlagung seiner Enden
mit Steuerdruck verschiebbar;

c) In den Steuereingängen ist je ein Ventil angeordnet, das den jeweiligen Steuereingang
druckabhängig öffnet oder schließt;

d) Der Teil eines jeden Steuereingangs zwischen Ventil und Ventilschieber ist über ein
Rückschlagventil entlüftbar.

Ein Steuerventil der vorgenannten Gattung
ist aus der DE—A—1 653 525 bekannt. Darin
ist ein schnell schaltendes 4/2 Wegeventil mit
Schnapp- oder Rastvorrichtung bekannt, dessen
Steuerleitungen je ein Druckventil aufweisen
und die über Rückschlagventile schnell entlüftbar sind.

Die bekannte Anordnung ist für eine Oszillatorsteuerung vorgesehen und ist für eine Folgesteuerung oder Zeitsteuerung nicht verwendbar.

Demgegenüber liegt der vorliegenden Erfindung die Aufgabe zugrunde, das Steuerventil
der eingangs erwähnten bekannten Gattung so
zu verbessern, daß eine Steigerung der Schaltfrequenz des Steuerventils, eine hohe Wiederholungsgenauigkeit der Schaltung, eine einfachere Schaltung mehrerer gleichartiger
Steuerventile ohne Hilfsventile bei größeren
Steueranlagen bei sowohl automatischer als
auch manueller Ansteuerung des Steuerventils
möglich sind.

Die Lösung dieser Aufgabe wird gemäß der
Erfindung durch folgende Merkmale erreicht:

e) Die Ventile sind normal offen und
schließen, wenn die Differenz der vor und hinter
dem jeweiligen Ventil herrschenden Drücke
einen vorgegebenen Wert übersteigt;

f) Das Rückschlagventil des zur Schaltung
des Ventilschiebers zu beaufschlagenden
Steuereingangs ist mit dem vor der Umschaltung druckführenden Ausgangskanal verbunden, das Rückschlagventil des anderen Steuereinganges mit der anderen Ausgangsleitung.

Die Erhöhung der Schaltfrequenz ist durch
die schnelle Entlüftung der Steuereingangsteile
sofort nach dem Umschalten des Ventilschiebers möglich. Durch das schlagartige Schalten dieses Steuerventils während des
Steuerablaufs wird bei einer Zeitsteuerung eine
ausgezeichnete Wiederholungsgenauigkeit erreicht.

In Weiterbildung der Erfindung kann der
Ventilschieber eine manuelle Betätigungseinrichtung aufweisen, wobei jedem Steuereingang ein UND-Glied vorgeschaltet ist, an dessen
einem Eingang der Steuerdruck und an dessen
anderem Ende ein zur manuellen Betätigung
wegnehmbares Drucksignal anliegt.

In der Zeichnung ist ein Ausführungsbeispiel
der Erfindung dargestellt. Es zeigen:

Fig. 1 einen mittleren Längsschnitt durch ein
erfindungsgemäßes Steuerventil in teilweise
schematischer Darstellung und

Fig. 2 ein UND-Glied.

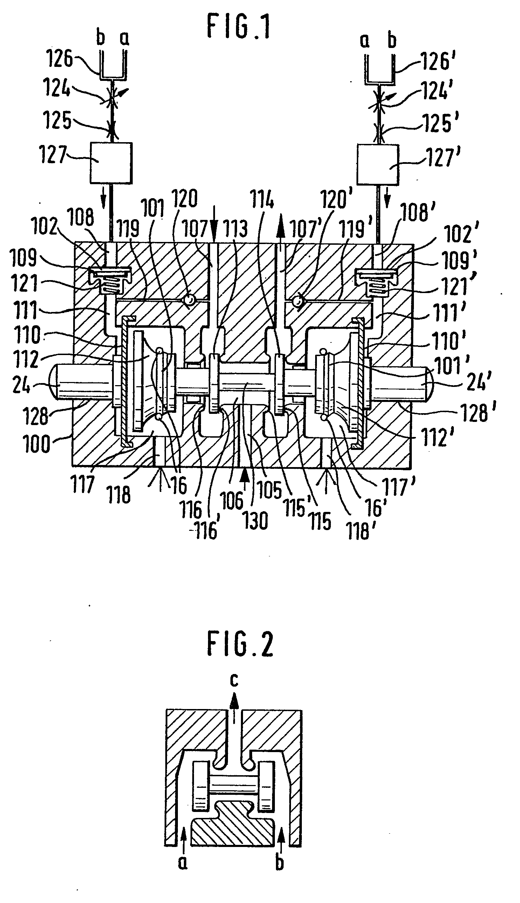

Das in Fig. 1 gezeigte Steuerventil weist in
einem Ventilgehäuse 100 einen an eine nicht
dargestellte Druckluftquelle angeschlossenen
Eingangskanal 105 auf, der in einen zentralen
Raum 106 mündet, welcher wahlweise mit
einem von zwei Ausgangskanälen 107, 107'
verbindbar ist. Die Steuerluftzuführung zum
Steuerventil erfolgt über Steuereingänge 108,
108', in denen je ein normal offenes, differenzdruckabhängig schließendes Ventil 109, 109'
angeordnet ist. Die differenzdruckabhängig
schließenden Ventile 109, 109' sind jeweils auf
der den Steuereingängen abgekehrten Seite mit
einer leichten Druckfeder 121, 121' versehen.
Die Druckfedern 121, 121' halten die Ventilteller der Ventile 109, 109' mit geringer Vorspannung gegen die obere Stirnseite der Bohrung der Ventile 109, 109'. In die obere Stirnseite der Ventilbohrungen ist eine Kerbe 102,
102' eingepreßt, die Steuerluft auch dann
durchläßt, wenn die Ventilteller an der oberen
Stirnseite der Bohrung in einer normal offenen
Stellung anliegen.

Der in den Teilen 111, 111' der Steuereingänge nach den Ventilen 109, 109' herrschende Steuerdruck beaufschlagt Membranen
110, 110', welche mit den Enden 112, 112'
eines zwei Ventilteller 113, 114 tragenden Ventilschiebers 130 zusammenwirken. Dem Ventilschieber 130 sind federnde Rasteinrichtungen
16, 16' zugeordnet, die mit Ringnutenpaaren
101, 101' an den Enden 112, 112' des Ventilschiebers 130 zusammenwirken und auch beim
Druckaufbau im Raum 106 die Ventilteller 113,
114 des Ventilschiebers 130 auf die Ventilsitze
115, 116' bzw. 115', 116 drücken.

Die Membranen 110, 110' trennen die
Steuereingangteile 111, 111' jeweils von
Räumen 117, 117' des Ventilgehäuses 100,
welche die Enden 112, 112' des Ventilschiebers 130 aufnehmen. Die Räume 117, 117'
weisen Entlüftungskanäle 118, 118' auf, die
wechselweise mit den Ausgangskanälen 107,
107' verbunden werden können. Diese Verbindung wird hergestellt durch die beiden Ventilteller 113, 114 des Ventilschiebers 130, denen an jeweils gegenüberliegenden Seiten die Ventilsitze 116, 116' bzw. 115, 115' zugeordnet sind. Die beiden Ventilsitze 115' und 116' begrenzen den zentralen Raum 106 auf der linken und rechten Seite, während die beiden Ventilsitze 115, 116 die Räume 117, 117' an den Enden des Steuerventils gegenüber den Ausgangskanälen 107, 107' und dem zentralen Raum 106 begrenzen.

Die beiden Steuereingangsteile 111, 111' sind durch Leitungen 119, 119' mit den Ausgangskanälen 107, 107' verbunden. In die Leitungen 119, 119' sind Rückschlagventile 120, 120' geschaltet, die sich jeweils in Richtung der Ausgangskanäle 107, 107' öffnen können.

Das Ventilgehäuse 100 weist an entgegengesetzten Seiten zwei Bohrungen 128, 128' auf, die sich koaxial zum Ventilschieber 130 erstrecken und jeweils eine manuelle Betätigungsvorrichtung in Form von Sichtanzeigern 24, 24' dichtend, aber verschiebbar aufnehmen und deren innere Enden mit der Außenseite der Membranen 110, 110' und den Enden 112, 112' des Ventilschiebers 130 zusammenwirken.

Den Steuereingängen 108, 108' sind jeweils UND-Glieder 126, 126' vorgeschaltet, denen Zeitdrosseln 124, 124', Blenden 125, 125' und kleine Volumina 127, 127' nachgeordnet sind. Gemäß Fig. 2 liegt an dem einen Eingang a jedes UND-Gliedes 126, 126' ein Steuerdruck an, während am anderen Eingang b ein zur manuellen Betätigung wegnehmbares Drucksignal anliegt, so daß erst, wenn a und b belüftet sind, Durchgang bei c ist. Wenn b entlüftet ist, wird der belüftete Eingang a geschlossen, und c bleibt über b entlüftet.

Das Steuerventil kann sowohl für Folgesteuerungen als auch für Zeitsteuerungen oder Kombinationen von beiden verwendet werden.

Bei einer Folgesteuerung für einen nicht dargestellten doppelt wirkenden pneumatischen Arbeitszylinder werden in beide Ausgangskanäle 107, 107' nicht dargestellte R-Rohrstücke eingesetzt. Die beiden Enden des Balkens der beiden T-Rohrstücke werden mit Schläuchen verbunden. Der eine Schlauch jedes der beiden T-Rohrstücke wird an je einer von zwei Seiten eines ebenfalls nicht gezeigten 5/2-Wegeventils des doppelt wirkenden pneumatischen oder hydropneumatischen Arbeitszylinders angeschlossen. Die beiden anderen Schläuche der beiden T-Rohrstücke werden mit beiden Seiten von zwei nicht gezeigten Grenztaster-Ventilen, z.B. Rollenhebelventilen, im Bereich der beiden Hubenden des Kolbens des Arbeitszylinders verbunden. Diese Grenztasterventile sind normalerweise durch Federvorspannung geschlossen und öffnen sich erst, wenn die Kolbenstange des Arbeitszylinders mit jeweils einem der Grenztasterventile in Wirkverbindung steht. Die Ausgänge der Grenztasterventile stehen mit den Eingängen a der UND-Glieder 126, 126' eines weiteren, nicht gezeigten und der Erfindung entsprechenden Steuerventils in Verbindung, das somit genau so ausgebildet ist, wie es in Fig. 1 gezeigt ist. Für die beschriebene Folgesteuerung fallen die in Fig. 1 gezeigten Zeitglieder 124, 124' fort.

Bei einer Zeitsteuerung für einen doppelt wirkenden pneumatischen oder hydropneumatischen Arbeitszylinder werden wiederum an die Steuerausgänge 107, 107' die nicht gezeigten T-Rohrstücke angesetzt. Die eine Schlauch beider T-Rohrstücke wird, wie bei der Folgesteuerung, mit beiden Seiten eines 5/2-Wege-Arbeitsventils für den Arbeitszylinder verbunden. Der andere Schlauch beider T-Rohrstücke wird an die Eingänge a der UND-Glieder 126, 126' eines anschließend zu schaltenden Steuerventils angeschlossen, das wiederum dem Steuerventil in Fig. 1 entspricht.

Bei einer kombinierten Folge- und Zeitsteuerung werden sowohl die von der Kolbenstange des Arbeitszylinders betätigten Grenztasterventile als auch die beschriebenen Zeitglieder 124, 124' verwendet.

Die Wirkungsweise des in Fig. 1 gezeigten Steuerventils ist folgende:

In der in Fig. 1 dargestellten Stellung des Ventilschiebers 130 ist über den Eingangskanal 105 der zentrale Raum 106 und das geöffnete Ventil 114, 115' der Steuerausgang 107' belüftet. Der Steuerausgang 107 ist über das geöffnete Ventil 113, 116, den Raum 117 und den Entlüftungskanal 118 entlüftet. Ebenso ist der Steuereingangsteil 111 über die Leitung 119 und das Rückschlagventil 120 sowie den Ausgangskanal 107 entlüftet.

Außerdem sind beide Steuereingänge 108, 108' drucklos. Der Steuerdruck im Ausgangskanal 107' schließt das Rückschlagventil 120'. Der Steuereingangsteil 111' ist drucklos.

Der Ventilschieber 130 wird durch die federnden Rastvorrichtungen 16, 16' in seiner rechten Stellung gehalten.

Zum Umschalten des Ventilschiebers 130 wird über den Eingang a des UND-Gliedes 126' Steuerdruck über die Zeitdrossel 124' durch die Blende 125' in das Volumen 127' geleitet, wo die eintretende Steuerdruckluft beruhigt wird. Da das Ventil 109' druckabhängig schaltet und im Normalzustand durch die eingepreßte Kerbe 102' in der oberen Stirnseite der Bohrung des Ventils 109' die Steuerluft auch dann durchläßt, wenn die Druckfeder 121' den Ventilteller an der oberen Stirnseite andrückt, läßt das Ventil 109' vor dem Schließen einen Druckstoß auf die Membran 110' durch. Dadurch wird der Gegendruck der Rastvorrichtung 16, 16' überwunden, so daß der Ventilschieber 130 schlagartig in die andere linke Endstellung verschoben wird. Die federnden Rastvorrichtungen 16, 16' rasten in der bisher freien Ringnut auf den Enden 112, 112' des Ventilschiebers 130 ein und arretieren diesen in seiner linken Endstellung.

Durch die Umschaltung des Ventilschiebers 130 wird der Ausgangskanal 107 über das nunmehr offene Ventil 113, 116' an den zentralen Raum 106 und die Druckleitung 105 angeschlossen und damit belüftet.

Ferner ist nunmehr der Ausgangskanal 107' über das jetzt geöffnete Ventil 114, 115 und den Raum 117' an den Entlüftungskanal 118' angeschlossen und damit entlüftet. Infolgedessen kann der Steuerausgangsteil 111' über die Leitung 119' und das Rückschlagventil 120' in den Ausgangskanal 107' druckentlastet werden. Dadurch schließt sich das druckabhängige Ventil 109'. Das Ventil 109' bleibt solange geschlossen, bis das anschließend angesteuerte Steuerventil umgeschaltet und den Eingang a des UND-Gliedes 126' entlüftet hat.

Neben der oben beschriebenen automatischen Ansteuerung des Ventilschiebers 130 ist dessen Betätigung auch von Hand über die Sichtanzeiger 24, 24' möglich. Dies setzt aber eine vorherige Entlüftung des Eingangs b der UND-Glieder 126, 126' voraus, an dem bei der automatischen Steuerung ständig ein Druck angelegt ist, der dem Druck am Steuereingang 105 entspricht.

Bei Verwendung der nicht dargestellten, in die Ausgangskanäle 107, 107' eingesetzten T-Rohrstücke, deren Balkenenden, wie beschrieben, einerseits an den Eingang a der UND-Glieder 126, 126' und andererseits an das Arbeitsventil des Arbeitszylinders über Schläuche angeschlossen sind, empfiehlt es sich, in den in den Eingang a der UND-Glieder 126, 126' führenden Balkenteil des T-Rohrstücks die Zeitdrosseln 124, 124' einzuschalten. Dies hat den Vorteil, daß, wenn die Schlauchverbindung zwischen dem T-Rohrstück und dem Eingang a der UND-Glieder 126, 126' zur Änderung des Steuerablaufs, z.B. zur Änderung der Bearbeitung von Werkstücken, gelöst wird, kein nennenswerter Druckverlust an dem von dem Eingang a des UND-Gliedes abgenommenen Schlauchende auftritt.

Die Steuerdruckzuführung zum Steuerventil kann auch ohne die dargestellten UND-Glieder 126, 126' und auch ohne die Zeitdrosseln 124, 124' durchgeführt werden, indem der Steuerdruck direkt den Blenden 125, 125' zugeführt wird.

Für den kompakten Zusammenbau einer pneumatischen Steuerung, die nur aus den Steuerventilen gemäß der Erfindung bestehen kann, empfiehlt es sich, das Ventilgehäuse mit drei in Fig. 1 zur Zeichenebene senkrechten Verbindungsbohrungen für den Eingang b der beiden UND-Glieder 126, 126' sowie für den Eingangskanal 105 zuversehen. Bei einem aus den Steuerventilen hergestellten Stapel fluchten dann die drei Bohrungen jedes Ventilgehäuses miteinander über die gesamte Reihe der nebeneinander liegenden Steuerventile, so daß eine Bohrung alle Eingangskanäle 105 der Steuerventile durch den ganzen Stapel mit Druckluft versorgt, während die beiden anderen Bohrungen jeweils mit dem Eingang b der UND-Glieder 126 und 126' durch den ganzen Ventilstapel hindurch miteinander verbunden sind. Die die Eingänge b der UND-Glieder 126, 126' verbindenden Bohrungen werden ein- oder beidseitig des Stapels belüftet oder entlüftet. Werden alle Eingänge b der UND-Glieder 126, 126' entlüftet, so werden sie alle gemäß Fig. 2 beim Eingang a durch den Steuerdruck geschlossen, so daß der Ausgang c über b entlüftet wird. Durch diese beidseitige Entlüftung aller Eingänge b der UND-Glieder 126, 126' kann jedes Steuerventil über die Sichtanzeiger 24, 24' manuell umgeschaltet werden, und die Eingänge b der UND-Glieder 126' werden bei Belüftung geschlossen. Infolgedessen sind die Steuereingänge a der UND-Glieder 126' geöffnet, so daß alle Steuerventile des ganzen Ventilstapels automatisch durch den Steuerdruck in ihre Ausgangsstellung schalten. Wenn die Eingänge b beider UND-Glieder 126 und 126' belüftet werden, läuft die Steuerung automatisch.

Mit dem gleichen Steuerventil, mit dem die Arbeitsventile für den Arbeitszylinder angesteuert werden, können gleichzeitig auch Meß- und Anwesenheitskontrollfunktionen mit Druckluft oder Vakuum ausgeführt werden, deren Druck in dem nicht gezeigten Verbindungsschlauch, der mit dem Eingang a des UND-Gliedes 126, 126' verbunden ist, wenig über die Schaltgrenze der federnden Rasteinrichtung 16, 16' ansteigt und den Ventilschieber in die andere Endstellung bewegt.

Darüberhinaus erlaubt das Steuerventil gemäß der Erfindung allein durch Steigerung des Luftdrucks eine proportionale Erhöhung der Schaltfrequenz des Steuerventils, vorausgesetzt, das Arbeitsventil ist ein 5/2-Wege-Ventil, an das ein doppelt wirkender Arbeitszylinder angeschlossen ist.

Für den Fachmann ist es verständlich, daß anstelle der in Fig. 1 gezeigten Membranen 110, 110' die Enden 112, 112' des Ventilschiebers 130 als Kolben in den Räumen 117, 117' ausgebildet sein können, ohne daß die Wirkungsweise des Ventils sich im Prinzip ändert.

## Patentansprüche

1. Pneumatisch betätigtes Steuerventil für eine vollpneumatische Nieder- und Arbeitsdrucksteuerung, insbesondere zur Signalgabe oder für Zeit- und Folgesteuerung von pneumatischen oder hydropneumatischen Maschinen, mit folgenden Merkmalen:

a) in einem Ventilgehäuse (100) mit einem Eingangskanal (105) für Druckluft, mindestens einem Entlüftungskanal (118, 118'), zwei Ausgangskanälen (107, 107') und zwei Steuereingängen (108, 108') ist ein Ventilschieber (130) zur wechselseitigen Verbindung der Ausgangskanäle (107, 107') mit dem Eingangskanal (105) und dem Entlüftungskanal (118, 118') angeordnet;

b) der Ventilschieber (130) ist zwischen zwei durch federnde Rasteinrichtungen (16, 16') gesicherte Schaltstellungen durch Beaufschlagung seiner Enden (112, 112') mit Steuerdruck (a) verschiebbar;

c) in den Steuereingängen (108, 108') ist je ein Ventil (109, 109') angeordnet, das den jeweiligen Steuereingang druckabhängig öffnet oder schließt;

d) der Teil (111, 111') eines jeden Steuereingangs (108, 108') zwischen Ventil (109, 109') und Ventilschieber ist über ein Rückschlagventil (120, 120') entlüftbar; gekennzeichnet durch folgende Merkmale:

e) die Ventile (109, 109') sind normal offen und schließen, wenn die Differenz der vor und hinter dem jeweiligen Ventil herrschenden Drücke einen vorgegebenen Wert übersteigt;

f) das Rückschlagventil (120') des zur Schaltung des Ventilschiebers (130) zu beaufschlagenden Steuereingangs (108', 111') ist mit dem vor der Umschaltung druckführenden Ausgangskanal (107') verbunden, das Rückschlagventil (120) des anderen Steuereinganges (108, 111) mit dem anderen Ausgangskanal (107).

2. Steuerventil nach Anspruch 1, dadurch gekennzeichnet, daß der Ventilschieber (130) eine manuelle Betätigungseinrichtung (24, 24') aufweist und daß jedem Steuereingang (108, 108') ein UND-Glied (126, 126') vorgeschaltet ist, an dessen einem Eingang der Steuerdruck (a) und an dessen anderem Eingang ein zur manuellen Betätigung wegnehmbares Drucksignal (b) anliegt.

**Revendications**

1. Vanne-pilote actionnée pneumatiquement pour une commande de basse pression et de pression de service entièrement pneumatique, notamment pour la génération de signaux ou pour la commande séquentielle et temporisée des machines pneumatiques ou hydropneumatiques, ayant les caractéristiques suivantes:

a) dans un corps de vanne (100) comprenant un conduit d'entrée (105) pour l'air comprimé, au moins un conduit d'échappement (118, 118'), deux conduits de sortie (107, 107') et deux entrées de commande (108, 108') est logé un tiroir (130) destiné à mettre en communication alternativement les conduits de sortie (107, 107') avec le conduit d'entrée (105) et le conduit d'échappement (118, 118');

b) le tiroir (130) peut être déplacé entre deux positions de manoeuvre verrouillées au moyen de dispositifs d'arrêt élastiques (16, 16') par application d'une pression de commande (a) sur ses extrémités (112, 112');

c) une soupape (109, 109') est disposée dans chacune des entrées de commande (108, 108') et ouvre ou ferme l'entrée de commande respective en fonction de la pression;

d) la partie (111, 111') de chacune des entrées de commande (108, 108') située entre la soupape (109, 109') et le tiroir peut être mise à l'échappement par l'intermédiaire d'un clapet de non retour (120, 120'); caractérisée par le fait que:

e) les soupapes (109, 109') sont normalement ouvertes et se ferment lorsque la différence des pressions existant en amont et un aval de chaque soupape dépasse une valeur prédéterminée;

f) le clapet de non retour (120') de l'entrée de commande (108', 111') devant être alimenté pour manoeuvrer la tiroir (130) est en communication avec le conduit de sortie (107') qui est sous pression avant la commutation, le clapet de non retour (120) de l'autre entrée de commande (108, 111) étant relié à l'autre conduit de sortie (107).

2. Vanne-pilote selon la revendication 1, caractérisée en ce que le registre (130) comporte un dispositif d'actionnement manuel (24, 24') et que chaque entrée de commande (108, 108') comprend un élément ET (126, 126') monté en amont, la pression de commande (a) étant appliquée à l'une des entrées, alors qu'un signal de pression (b) susceptible d'être supprimé pour la commande manuelle est appliqué à l'autre entrée.

**Claims**

1. Pneumatically operated control valve for a fully-pneumatic system for controlling both the low pressure and working pressure sides of a pneumatic installation, in particular for signalling purposes, or for time-controlling or sequence-controlling pneumatic or hydropneumatic machines, this control valve having the following features:

a) a valve slide (130) is located in a valve housing (100) having an inlet passage (105) for compressed air, at least one vent passage (118, 118'), two outlet passages (107, 107'), and two control input ports (108, 108'), this valve slide being provided for the purpose of alternately connecting the outlet passages (107, 107') to the inlet passage (105) and to the vent passage (118, 118');

b) the valve slide (130) can be shifted, by applying the control system pressure (a) to its ends (112, 112'), between two switching positions which are secured by means of resilient detent devices (16, 16');

c) a valve (109, 109') is located in each of the control input ports (108, 108'), this valve opening or closing the particular control input port in a pressure-dependent manner;

d) the portion (111, 111') of each control input port (108, 108'), between the valve (109, 109') and the valve slide, is capable of being vented via a check valve (120, 120'); this control valve comprising the following features:

e) the valves (109, 109') are normally open, and close when the difference of the pressures prevailing upstream and downstream of the particular valve exceeds a predetermined value;

f) the check valve (120') of the control input port (108', 111'), to which pressure must be applied in order to switch the valve slide (130), is connected to the outlet passage (107') which carries pressure prior to the switching-over operation, and the check valve (120) of the other control input port (108, 111) is connected to the other outlet passage (107).

2. Control valve as claimed in Claim 1, wherein the valve slide (130) possesses a device (24, 24') for operating the slide manually, and wherein an AND-gate (126, 126') is located upstream of each control input port (108, 108'), the control system pressure (a) being applied to one input of this gate, and a pressure signal (b), which can be removed for the purpose of manual operation, being applied to its other input.

# FIG.1

# FIG.2